# FASCICULE DE BREVET EUROPEEN

(11) **EP 3 038 862 B1**
(45) Date de publication et mention de la délivrance du brevet: **26.12.2018**
(21) Numéro de dépôt: 14790124.3
(22) Date de dépôt: 01.07.2014
(51) Int. Cl.: B60R 5/00

(54) **AGENCEMENT D'UN CLOISONNEMENT COULISSANT A L'INTERIEUR D'UN VEHICULE**
SCHIEBBARE ABSCHOTTUNGSANORDNUNG IM INNERN EINES FAHRZEUGS
SLIDING PARTITIONING ARRANGEMENT INSIDE A VEHICLE.

(30) Priorité: 30.08.2013 FR 1358326
(43) Date de publication de la demande: 06.07.2016
(73) Titulaire: PSA Automobiles SA, 78300 Poissy (FR)
(72) Inventeur: HAYAT, David, F-78770 Auteuil (FR); DUTOT, Christophe, F-94400 Vitry sur Seine (FR); BAUVINEAU, Laurent, F-92160 Antony (FR); SA COUTINHO, Lionel, F-92400 Courbevoie (FR); LURET, Marie Helene, F-45260 Montereau (FR); DUVIVIER, Arnaud, F-91120 Palaiseau (FR); VAZQUEZ, Ruben, E-36400 Porrino (Pontevedra) (ES)
(86) Numéro de dépôt international: PCT/FR2014/051684
(87) Numéro de publication internationale: WO 2015/028730

(56) Documents cités:
- EP-A2- 1 176 060
- WO-A1-97/04991
- DE-A1- 10 204 664
- GB-A- 2 384 464
- US-A- 4 621 856
- US-A- 4 919 467
- US-A1- 2005 184 559
- US-A1- 2008 012 371
- US-A1- 2011 156 420

## Description

L'invention se situe dans le domaine de l'aménagement intérieur de véhicules de type utilitaires.

Les véhicules utilitaires doivent permettre de trouver un compromis entre proposer un espace de chargement le plus important possible et garantir une sécurité optimale à ses utilisateurs en contenant le chargement de sorte à ce qu'il ne pénètre pas de manière intempestive dans l'habitacle. Ainsi, les règlementations actuelles demandent d'installer des structures d'arrêt de charge permettant de séparer l'espace de chargement de l'habitacle du véhicule. Il est également connu de pouvoir retirer ou escamoter des sièges passagers arrières afin de pouvoir libérer un volume utile pour le transport de marchandises, et notamment dans le cadre de transport d'objets longs.

Le document FR2836877 montre un exemple de cloison intérieure rigide d'arrêt de charge, transversale à la direction longitudinale du véhicule, permettant de séparer le compartiment de chargement de l'habitacle du véhicule. La cloison intérieure comprend un panneau fixe dans lequel est ménagée une ouverture mettant en communication l'espace de chargement et l'habitacle. Cette ouverture est située au niveau du siège passager avant qui peut s'escamoter afin de définir un espace secondaire de chargement autorisant le chargement de produits longs. L'ouverture peut être obturée par un panneau coulissant. Cette solution présente l'inconvénient de ne pas offrir de protection latérale du conducteur en cas de ripage des produits par exemple lors de la prise brusque d'un virage. Cette cloison comporte uniquement un panneau fixé derrière les dossiers des sièges avant. Le problème n'est pas résolu, dans le cas où l'habitacle du véhicule comporte deux rangées de sièges puisque la cloison est fixe. Les véhicules utilitaires sont devenus extrêmement modulables afin de répondre au souhait de la clientèle. Ainsi, l'habitacle du véhicule peut passer de deux rangées de sièges à une rangée de siège dans l'habitacle du véhicule, pour augmenter l'espace de chargement. Cette configuration doit être effectuée sans pénaliser la sécurité des utilisateurs, par conséquent le dispositif de cloisonnement doit aussi bien protéger les utilisateurs lorsque l'habitacle comporte deux rangées de sièges que lorsqu'il comporte une seule rangée de sièges.

Le document US 2011/0156420 A1 décrit un agencement d'un cloisonnement selon le préambule de la revendication 1.

L'invention a pour objectif de résoudre les problèmes rencontrés dans l'art antérieur en proposant un nouvel agencement de cloisonnement d'un véhicule de type utilitaire, simple et économique, pouvant assurer à la fois une protection des utilisateurs, dans l'habitacle derrière les dossiers de la deuxième rangée de sièges que derrière les dossiers de la première rangée de sièges.

A cet effet l'invention propose un agencement d'un cloisonnement pour un espace intérieur de chargement de véhicule utilitaire, ledit agencement comprenant un panneau mobile grillagé configuré pour séparer ledit espace intérieur de chargement et l'habitacle, le panneau mobile grillagé est apte à coulisser d'une position derrière une deuxième rangée de sièges, à une autre position une première rangée de sièges, afin d'augmenter l'espace de chargement du véhicule, le dit agencement comprenant un panneau plein sur lequel vient se fixer le dossier (5a) et les appuie-têtes de la deuxième rangée de sièges, le panneau plein comportant une charnière articulée sur le plancher à la bordure opposée à celle où reposent les appuie-têtes, le panneau mobile grillagé étant fixé à sa bordure inférieure par un crochet en prise dans un verrou situé à l'extrémité opposée aux charnières du panneau plein, quand le panneau mobile grillagé est à l'arrière de la première rangée de siège.

Avantageusement, le panneau mobile grillagé est fixé à sa bordure inférieure par un crochet (26) en prise dans un verrou situé à proximité de la charnière du panneau plein lorsque le dispositif est dans la position derrière une deuxième rangée de sièges.

Selon une variante, le panneau mobile grillagé est fixé à son extrémité supérieure, et à proximité de ses bords par deux guides à rouleaux fixés suivant la direction longitudinale du véhicule.

Avantageusement, les deux guides à rouleaux sont en prise dans des glissières longitudinales fixées, à l'aide de support au plafond de l'habitacle du véhicule.

Selon une autre variante, le panneau mobile grillagé possède une dimension identique à la section transversale de l'espace de chargement.

De façon avantageuse, le panneau mobile grillagé comporte une bordure périphérique tubulaire.

Selon une variante, le panneau mobile grillagé comporte des moyens de verrouillage sur les glissières longitudinales afin de limiter l'amplitude du déplacement, en position avant et arrière.

L'invention sera bien comprise et d'autres aspects et avantages apparaîtront clairement à la lecture de la description qui suit, donnée à titre d'exemple par rapport aux figures annexées sur lesquelles :
- La figure 1 présente une vue en perspective de l'agencement d'un cloisonnement selon l'invention vu depuis l'habitacle du véhicule lorsque le panneau mobile grillagé est en position d'obturation de la première rangée de siège ;
- La figure 2 présente une vue en perspective de l'agencement d'un cloisonnement selon l'invention vu depuis l'espace de chargement du véhicule lorsque le panneau mobile grillagé est en position d'obturation de la première rangée de siège ;
- La figure 3 présente une vue en perspective du dispositif de cloisonnement selon l'invention, vu depuis l'habitacle du véhicule lorsque le panneau mobile grillagé est dans une position d'obturation de la deuxième rangée de siège en position d'utilisation ;
- La figure 4 présente une vue en perspective du dispositif de cloisonnement selon l'invention vu depuis l'espace de chargement du véhicule lorsque le panneau mobile grillagé est en position d'obturation de la deuxième rangée de siège en position d'utilisation ;
- Les figures 5 à 7 présentent les différentes séquences à effectuer afin de déployer le dispositif de cloisonnement de la deuxième rangée de siège à la première rangée de siège.

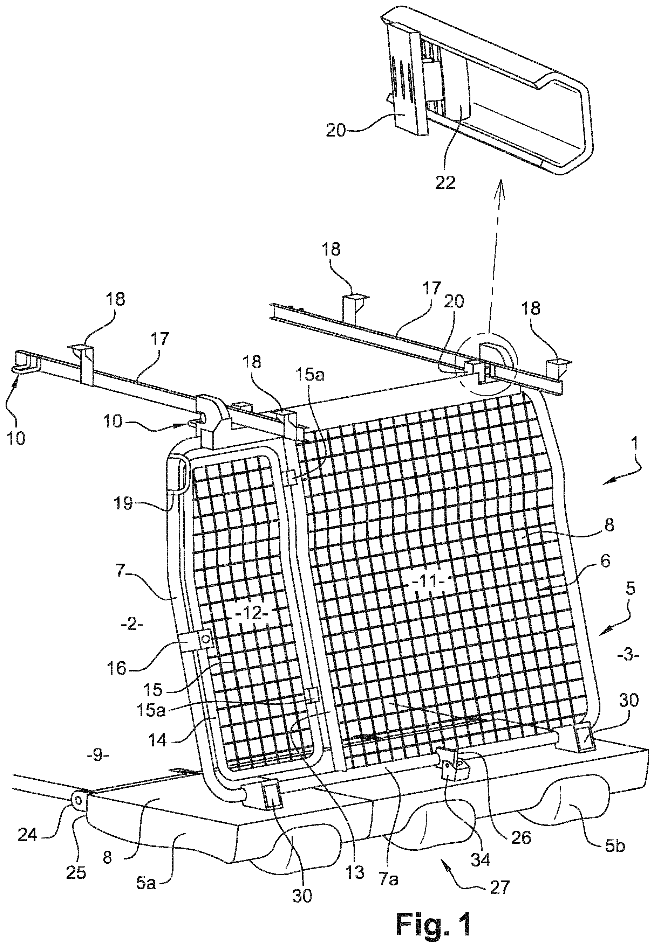

La figure 1 présente une vue en perspective de l'agencement 1 d'un cloisonnement selon l'invention vu depuis l'habitacle 3 du véhicule lorsque le panneau mobile grillagé 6 est en position d'obturation de la première rangée de sièges 5. Le panneau grillagé 6 est de forme sensiblement rectangulaire et possède une dimension identique à la section transversale de l'espace de chargement 2 du véhicule. Le panneau grillagé 6 comprend une bordure périphérique tubulaire 7 à l'intérieur de laquelle vient se fixer le grillage 8 par un moyen approprié. Bien évidemment, la bordure périphérique tubulaire, pourrait être d'une autre forme de profilé par exemple rectangulaire. Le panneau grillagé 6 comprend une partie fixe 11 et une partie mobile 12. La partie fixe 11 est délimitée par une entretoise tubulaire verticale 13 placée au deux tiers de la largeur du panneau grillagé 6. La partie mobile 12 constitue une porte comprenant une bordure 14 périphérique tubulaire à l'intérieur de laquelle vient se fixer par un moyen approprié le grillage 6. La porte 12 est articulée par des charnières 15a fixées sur l'entretoise 13 et un verrou 16 fixé sur la bordure périphérique tubulaire 7. En outre, une poignée 19 fixée sur la bordure tubulaire 7 permet la préhension du panneau grillagé 6 pour le déplacer de la première rangée de sièges 15 à la deuxième rangée de sièges 5 et inversement. Le panneau grillagé 6 est soutenu par l'intermédiaire de deux support 21 comportant des guides 20 à rouleaux 22 fixés sur la bordure périphérique 7 et deux glissières 17 montées parallèlement suivant l'axe longitudinal du véhicule. Plus particulièrement, le panneau mobile grillagé 6 est fixé à son extrémité supérieure, et à proximité de ses bords par les deux guides 20 à rouleaux 22 fixés suivant la direction longitudinale du véhicule. Les glissières 17 sont fixées au plafond de l'habitacle 3 du véhicule par quatre supports 18. Dans le détail A, on voit que le panneau grillagé 6 est dirigé par deux guides 20 à rouleaux. Le guide comprend trois rouleaux 22 alignés, ce qui permet d'assurer la stabilité, la rigidité du panneau grillagé 6, lors de ses déplacements par coulissement dans les glissières 17. L'agencement 1 de cloisonnement comprend également un panneau plein 8 sur lequel vient se fixer le dossier 5a et les appuis têtes 5b de la deuxième rangée de sièges 5. Le panneau plein 8 comporte une charnière 24 articulée sur le plancher 9 à la bordure 25 opposée à celle où reposent les appuie-têtes 5b. Dans cette configuration, le panneau plein 8 réalise la continuité de l'espace de chargement 2 en fournissant un plancher plat 9 derrière la première rangée de siège 15. De plus, le panneau mobile grillagé 6 est fixé à sa bordure inférieure 7a, par un crochet 26 fixé fermement dans un verrou 34 placé au niveau du siège central et à l'extrémité situé près de l'appuie-tête du panneau plein 8, quand le panneau mobile grillagé 6 est à l'arrière de la première rangée de siège 15. De plus, le panneau mobile grillagé 6 comporte des moyens de verrouillage 10 sur les glissières 17 longitudinales afin de limiter l'amplitude du déplacement, en position avant et arrière. Le panneau grillagé 6 comporte également des tampons 30 sur la bordure 7a susceptible de venir en appui sur des montants de la première rangée de siège 15. Le panneau mobile grillagé 6 réalise un arrêt de charge efficace derrière la première rangée de siège 15. Le panneau grillagé 6 permet au conducteur du véhicule de regarder et de conserver la visibilité vers l'arrière du véhicule.

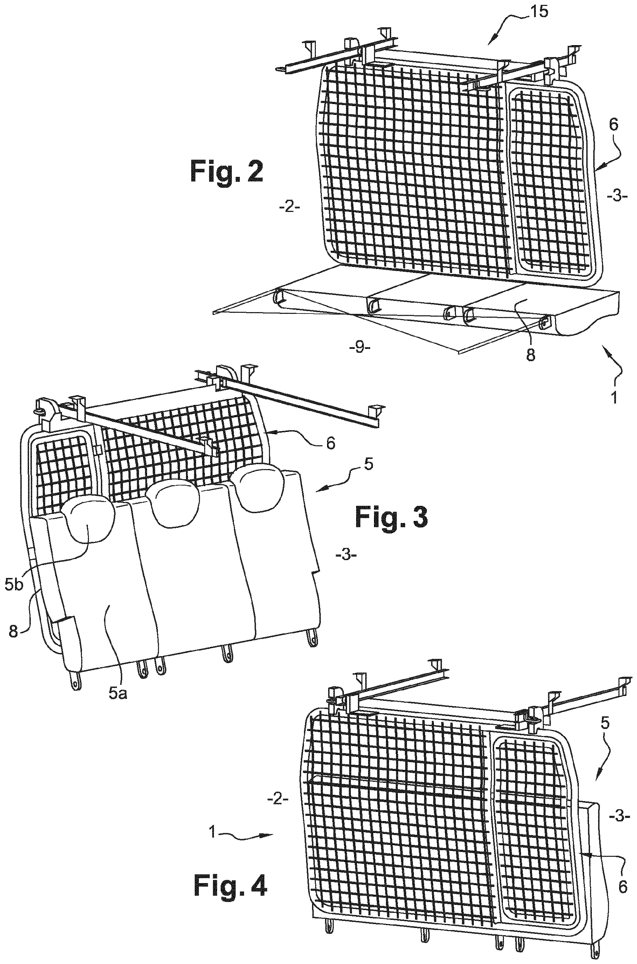

La figure 2 présente une vue en perspective de l'agencement 1 d'un cloisonnement selon l'invention vu depuis l'espace de chargement 2 du véhicule lorsque le panneau mobile grillagé 6 est en position d'obturation de la première rangée de siège 15, dirigé vers l'avant de l'habitacle 3. Le panneau plein 8 réalise la continuité de l'espace de chargement 2 en fournissant un plancher plat 9 derrière la première rangée de siège 15.

La figure 3 présente une vue en perspective de l'agencement 1 d'un cloisonnement selon l'invention, vu depuis l'habitacle 3 du véhicule lorsque le panneau mobile grillagé 6 est dans une position d'obturation de la deuxième rangée de siège 5 en position d'utilisation. Dans cette configuration, le panneau plein 8 recevant les dossiers 5a et les appuie-têtes 5b de la deuxième rangée de sièges 5 est placé en position d'utilisation et le panneau grillagé 6 est placé derrière.

La figure 4 présente une vue en perspective de l'agencement 1 d'un cloisonnement selon l'invention vu depuis l'espace de chargement 2 du véhicule lorsque le panneau mobile grillagé 6 est en position d'obturation de la deuxième rangée de siège 5 en position d'utilisation. Dans cette configuration, le panneau grillagé 6 obture en totalité la séparation entre l'espace de chargement 2 et l'habitacle 3, en procurant un arrêt de charge efficace pour la sécurité des utilisateurs de la deuxième rangée de siège 5.

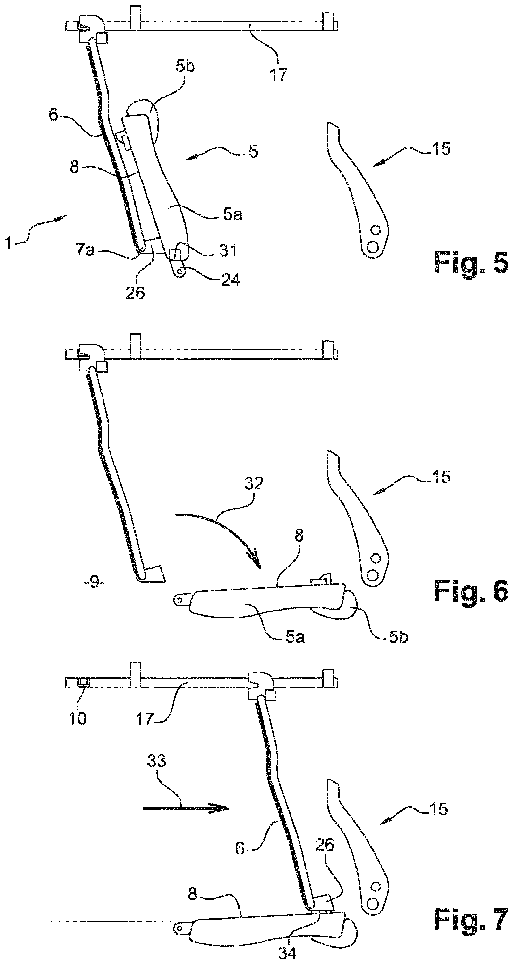

Les figures 5 à 7 présentent les différentes séquences à effectuer afin de déployer le système de l'agencement 1 d'un cloisonnement de la deuxième rangée de siège 5 à la première rangée de sièges 15. Sur la figure 5, l'agencement 1 de cloisonnement est configuré derrière la deuxième rangée de sièges 5, par le panneau grillagé 6 et le panneau plein 8 recevant les dossiers 5a de sièges et les appuie-têtes 5b. Le panneau grillagé 6 est dans sa position reculée et verrouillée sur les glissières 17 fixée au plafond du véhicule et à sa bordure inférieure 7a par le crochet 26 en prise dans un verrou 31 situé à proximité de la charnière 24 du panneau plein 8. Les utilisateurs peuvent occuper la deuxième rangée de sièges 5 de l'habitacle 3, en toute sécurité. Sur la figure 6, les panneaux plein 8 comportant les dossiers 5a et les appuie-têtes 5b sont repliés suivant la flèche 32 sur les assises (non représentées) pour prolonger l'espace de chargement 9, derrière la première rangée de sièges 15. Sur la figure 7, le panneau grillagé 6 est déplacé par coulissement suivant la flèche 33 vers l'avant du véhicule jusqu'à son blocage par les moyens de verrouillage 10 sur les glissières 17, derrière la première rangée de sièges 15 et par le crochet 26 en prise dans le verrou 34 du panneau plein 8. Les utilisateurs peuvent alors occuper la première rangée de sièges 5 de l'habitacle 3, en toute sécurité.

## Revendications

1. Agencement (1) d'un cloisonnement pour un espace intérieur de chargement (2) de véhicule utilitaire, ledit agencement (1) comprenant un panneau mobile grillagé (6) configuré pour séparer ledit espace intérieur de chargement (2) et l'habitacle (3), le panneau mobile grillagé (6) étant apte à coulisser d'une position derrière une deuxième rangée de sièges (5), à une autre position derrière une première rangée de sièges (15), afin d'augmenter l'espace de chargement (2) du véhicule, le dit agencement (1) comprenant un panneau plein (8) sur lequel vient se fixer le dossier (5a) et les appuie-têtes (5b) de la deuxième rangée de sièges (5), le panneau plein (8) comportant une charnière (24) articulée sur le plancher (9) à la bordure (25) opposée à celle où reposent les appuie-têtes (5b), **caractérisé en ce que** le panneau mobile grillagé (6) est fixé à sa bordure inférieure (7a) par un crochet (26) en prise dans un verrou (34) situé à l'extrémité opposée aux charnières (24) du panneau plein (8), quand le panneau mobile grillagé (6) est à l'arrière de la première rangée de siège (15) .

2. Agencement (1) d'un cloisonnement selon la revendication 1, **caractérisé en ce que** le panneau mobile grillagé (6) est fixé à sa bordure inférieure (7a) par un crochet (26) en prise dans un verrou (31) situé à proximité de la charnière (24) du panneau plein (8) lorsque le dispositif est dans la position derrière une deuxième rangée de sièges (5).

3. Agencement (1) d'un cloisonnement selon l'une quelconque des revendications 1 à 2, **caractérisé en ce que** le panneau mobile grillagé (6) est fixé à son extrémité supérieure, et à proximité de ses bords par deux guides (20) à rouleaux (22) fixés suivant la direction longitudinale du véhicule.

4. Agencement (1) d'un cloisonnement selon la revendication 3, **caractérisé en ce que** les deux guides (20) à rouleaux (22) sont en prise dans des glissières longitudinales (17) fixées, à l'aide de support (18) au plafond de l'habitacle (3) du véhicule.

5. Agencement (1) d'un cloisonnement selon l'une quelconque des revendications 1 à 3, **caractérisé en ce que** le panneau mobile grillagé (6) possède une dimension identique à la section transversale de l'espace de chargement (2).

6. Agencement (1) d'un cloisonnement selon l'une quelconque des revendications 1 à 3 et 5, **caractérisé en ce que** le panneau mobile grillagé (6) comporte une bordure (7) périphérique.

7. Agencement (1) d'un cloisonnement selon l'une quelconque des revendications 1 à 3 et 5 à 6, **caractérisé en ce que** le panneau mobile grillagé (6) comporte des moyens de verrouillage (10) sur les glissières longitudinales (17) afin de limiter l'amplitude du déplacement, en position avant et arrière.

## Patentansprüche

1. Anordnung (1) einer Raumaufteilung einer Raumaufteilung für einen inneren Laderaum (2) eines Nutzfahrzeugs, wobei die Anordnung (1) eine vergitterte bewegbare Platte (6) umfasst, die konfiguriert ist, um den inneren Laderaum (2) und den Fahrgastraum (3) zu trennen, wobei die vergitterte bewegbare Platte (6) geeignet ist, um von einer Position hinter einer zweiten Reihe von Sitzen (5) zu einer anderen Position hinter einer ersten Reihe von Sitzen (15) zu gleiten, um den Laderaum (2) des Fahrzeugs zu vergrößern, wobei die Anordnung (1) eine geschlossene Platte (8) umfasst, an der die Rückenlehne (5a) und die Kopfstützen (5b) der zweiten Reihe von Sitzen (5) befestigt sind, wobei die geschlossene Platte (8) ein Scharnier (24) umfasst, das den Boden (9) gelenkig mit der Umrandung (25) verbindet, die derjenigen Umrandung, an der die Kopfstützen (5b) aufliegen, gegenüberliegt, **dadurch gekennzeichnet, dass** die vergitterte bewegbare Platte (6) an ihrer unteren Umrandung (7a) durch einen Haken (26) befestigt ist, der in einen Riegel (34) greift, der sich am den Scharnieren (24) gegenüberliegenden Ende der geschlossenen Platte (8) befindet, wenn die vergitterte bewegbare Platte (6) hinter der ersten Reihe von Sitzen (15) ist.

2. Anordnung (1) einer Raumaufteilung nach Anspruch 1, **dadurch gekennzeichnet, dass** die vergitterte bewegbare Platte (6) an ihrer unteren Umrandung (7a) durch einen Haken (26) befestigt ist, der in einen Riegel (31) greift, der sich in der Nähe des Scharniers (24) der geschlossenen Platte (8) befindet, wenn die Vorrichtung in der Position hinter einer zweiten Reihe von Sitzen (5) ist.

3. Anordnung (1) einer Raumaufteilung nach einem der Ansprüche 1 bis 2, **dadurch gekennzeichnet, dass** die vergitterte bewegbare Platte (6) an ihrem oberen Ende, und in der Nähe ihrer Ränder durch zwei Führungen (20) auf Rollen (22) befestigt ist, die entlang der Längsrichtung des Fahrzeugs befestigt sind.

4. Anordnung (1) einer Raumaufteilung nach Anspruch 3, **dadurch gekennzeichnet, dass** die zwei Führungen (20) auf Rollen (22) in längsgerichtete Gleitschienen (17) greifen, die mithilfe einer Halterung (18) an der Decke des Fahrgastraums (3) des Fahrzeugs befestigt sind.

5. Anordnung (1) einer Raumaufteilung nach einem der Ansprüche 1 bis 3, **dadurch gekennzeichnet, dass** die vergitterte bewegbare Platte (6) eine Größe besitzt, die identisch mit dem quer verlaufenden Abschnitt des Laderaums (2) ist.

6. Anordnung (1) einer Raumaufteilung nach einem der Ansprüche 1 bis 3 und 5, **dadurch gekennzeichnet, dass** die vergitterte bewegbare Platte (6) eine umlaufende Umrandung (7) umfasst.

7. Anordnung (1) einer Raumaufteilung nach einem der Ansprüche 1 bis 3 und 5 bis 6, **dadurch gekennzeichnet, dass** die vergitterte bewegbare Platte (6) Verriegelungsmittel (10) auf den längsgerichteten Gleitschienen (17) umfasst, um das Verschiebungsausmaß in vorderer und hinterer Position zu begrenzen.

## Claims

1. Arrangement (1) of a partition of a partition for the inner loading space (2) of a utility vehicle, said arrangement (1) comprising a movable grill panel (6) configured to separate said inner loading space (2) from the passenger compartment (3), the movable grill panel (6) being configured to slide from a position behind a second row of seats (5) to another position behind a first row of seats (15), for the purpose of increasing the loading space (2) of the vehicle, said arrangement (1) comprising a solid panel (8) to which the backs (5a) and the headrests (5b) of the second row of seats (5) are secured, the solid panel (8) comprising an articulated hinge (24) on the floor (9) located on the edge (25) facing the edge supporting the headrests (5b), **characterised in that** the movable grill panel (6) is secured at its lower edge (7a) by means of a hook (26) inserted in a lock (34) located at the opposite end of the hinge (24) of the solid panel (8), when the movable grill panel (6) is behind the first row of seats (15).

2. Arrangement (1) of a partition according to claim 1, **characterised in that** the movable grill panel (6) is secured at its lower edge (7a) by a hook (26) inserted in a lock (31) located close to the hinge (24) of the solid panel (8) when the device is in position behind the second row of seats (5).

3. Arrangement (1) of a partition according to any one of the claims 1 to 2, **characterised in that** the movable grill panel (6) is secured at its upper edge, and in the vicinity of its sides, by two guides (20) fitted with rollers (22) secured and oriented in the longitudinal direction of the vehicle.

4. Arrangement (1) of a partition according to claim 3, **characterised in that** the two guides (20) fitted with rollers (22) are inserted in longitudinal sliders (17) secured, by means of a support (18), to the roof of the vehicle's passenger compartment (3).

5. Arrangement (1) of a partition according to any one of the claims 1 to 3, **characterised in that** the movable grill panel (6) features the same dimension as the transversal section of the loading space (2).

6. Arrangement (1) of a partition according to any one of the claims 1 to 3 and 5, **characterised in that** the movable grill panel (6) features a peripheral border (7).

7. Arrangement (1) of a partition according to any one of the claims 1 to 3 and 5 to 6, **characterised in that** the movable grill panel (6) comprises locking means (10) on the longitudinal sliders (17) in order to limit the displacement range, both in a forward position and in a rear position.
